# EUROPEAN PATENT SPECIFICATION

(11) **EP 1 771 493 B1**
(45) Date of publication and mention of the grant of the patent: **23.09.2009**
(21) Application number: 05759801.3
(22) Date of filing: 13.07.2005
(51) Int. Cl.: C08G 63/00, C08G 63/88, C08K 5/00, C08K 5/3442

(54) **POLYESTER RESIN COMPOSITIONS WITH REDUCED EMISSION OF VOLATILE ORGANIC COMPOUNDS**
POLYESTERHARZZUSAMMENSETZUNGEN MIT VERRINGERTER EMISSION VON LEICHTFLÜCHTIGEN ORGANISCHEN VERBINDUNGEN
COMPOSITIONS DE RESINE POLYESTER A EMISSION REDUITE DE COMPOSES ORGANIQUES VOLATILES

(30) Priority: 28.07.2004 EP 04077166
(43) Date of publication of application: 11.04.2007
(73) Proprietor: DSM IP Assets B.V., 6411 TE Heerlen (NL)
(72) Inventor: HANDELS, Johannes, Wendelinus, Hubertus, 76694 Forst (DE); LORENZ, Reinhard, 48565 Steinfurt (DE); HAGENBERG, Stefan, 45739 Oer-Erkenschwick (DE); BÜNKER, Jörg, 48301 Schapdetten (DE); REUTHER, Erik, 68165 Mannheim (DE); GERTH, Dale, 67346 Speyer (DE)
(74) Representative: Verhaegen, Ilse Maria M.
(86) International application number: PCT/NL2005/000504
(87) International publication number: WO 2006/011785

(56) References cited:
- EP-A- 0 158 238
- EP-A- 0 166 172
- EP-A- 0 445 639
- DE-A- 3 328 133
- DE-A- 10 215 474
- US-A- 4 442 280
- US-A- 5 142 015
- US-A- 5 216 107
- US-A1- 2001 009 939
- US-A1- 2004 018 374
- US-A1- 2004 024 114
- US-B1- 6 518 388
- US-B1- 6 599 992
- PATENT ABSTRACTS OF JAPAN vol. 2000, no. 24, 11 May 2001 (2001-05-11) & JP 2001 200201 A (NIPPON ESTER CO LTD), 24 July 2001 (2001-07-24)

## Description

### Background of the invention

The present invention relates to thermally curable resin compositions, having shrink-controlled properties and being suitable for use in sheet moulding compounds and bulk moulding compounds (SMCs and BMCs) comprising, *inter alia*, (a) an unsaturated polyester; (b) an alkenyl aromatic monomer; (c) a low profile additive (hereinafter also referred to as LPA); (d) a peroxide initiator; (e) a thickening agent; (f) fibrous reinforcement material; and optionally one or more other components selected from the group of (g) a mould release agent; (h) wetting and viscosity reducing agents; and (i) fillers. Thermally curable, i.e. thermosetting, resin compositions are resin compositions that can be cured by subjecting the resin compositions to a heat treatment. The resin compositions according to the invention in particular have a low emission of volatile organic compounds, hereinafter also referred to as VOC. More particularly, the present invention relates to such thermally curable resin compositions having Class A properties, especially Class A SMC compounds.

As meant herein, the term "shrink-controlled" reflects that the shrinkage of the resin composition upon curing, under both standard compression and injection moulding conditions, generally temperatures of 140 to 170 °C and pressures of 5 to 10 MPa, is in the range of from +1% to -0.1 %. Within said broadest range, narrower sub-ranges can be distinguished. The skilled man in the field usually defines such ranges and sub-ranges, as
(i) low-shrink (also referred to as LP; this is the broadest range of shrinkage, ranging from +1% to -0.1% shrinkage upon curing);
(ii) low-profile (also referred to as LP; this is the range of shrinkage from +0.2% to -0.05% shrinkage upon curing);
(iii) Class A (this is the narrowest range of shrinkage, ranging from +0.01% to -0.09% shrinkage upon curing).

It is to be noticed, that negative values of shrinkage correspond to (slight) expansion. There exists a vast amount of literature regarding shrinkage of unsaturated polyester resins, use of LPAs for shrinkage control, and mechanisms of shrinkage. Reference, for instance can be made to the following literature:
- Atkins, K.E., in Paul D.R. and Newman S., editors, Polymer blends, Vol.2, New York, Academic Press (1978), p.391;
- Han, C.D. et al., in J. Appl. Polym. Sci., 28 (1983), p.743;
- Meyer, R.W., Handbook of pultrusion technology, New York, Chapman and Hall (1988), p.62;
- Bartkus, E.J et al., in Applied. Polymer. Symp., No. 15, page 113 (1970);
- Pattison, V.A. et al., in J. Appl. Polym. Sci., 18 (1974), p.2763;
- Hsu, C.P. et al., in J. Appl. Polym. Sci., 31 (1991), p.1450;
- Suspene, L, et al., in Polymer 32 (1991), p.1594;
- Huang, Y.J. et al., in J. Appl. Polym. Sci., 55 (1995), p.323;
- Huang, Y.J. et al., in Polymer 37 (1996), p.401.

Finally, the present invention relates to low-VOC products and parts produced from the SMCs and BMCs according to the invention. Typically such parts produced may be parts that are visible (so-called "Sichtteile") and thus need to have good surface appearance properties, or parts that are intended to provide adequate mechanical strength to the objects in which the parts are being applied. The latter type of parts usually at least has one ribbed surface. Most importantly, the products and parts according to the invention are being applied in the automotive industries.

Thermally curable resins in general, and unsaturated polyester resins in particular, are useful in a variety of applications, including automotive parts. In a typical sheet moulding compound (SMC) or bulk moulding compound (BMC) used in the automotive industries the unsaturated polyester component represents about 10 to 15% by weight of the total formulation.

SMC and BMC materials based on unsaturated polyester resins generally exhibit excellent physical properties, good surface appearance as well as good weatherability.

The so-called Class A SMCs form a category of SMCs, as are preferably used in the automotive industries, that is particularly excellent in surface properties and, *inter alia* due to the presence of certain low profile additives, shows very good dimensional properties (shrinkage of from ±0.01% to -0.09% when being cured).

They are generally applied in the production of car body parts or even complete car bodies. Notwithstanding these advantages, the commercial adoption and success of SMCs and BMCs in the automotive industries is rather limited, as these materials according to the state of the art tend to exhibit a relatively high emission of volatile organic compounds (VOC).

Many approaches so far have been attempted to reduce the VOC-emissions of unsaturated polyester based composite materials. For instance, reference can be made to attempts in changing the resin composition, use of a reactive diluent, and use of more active initiators for the polymerization reaction.

It has, for instance, as described in papers "Emissionen aus SMC/BMC Bauteilen", parts 1 & 2, from the "Arbeitsgemeinschaft Verstärkter Kunststoffe e.V.", 1997, turned out, that replacing commonly used peroxide initiators like t-butylperbenzoate (e.g. Trigonox^{®} C, AKZO; the Netherlands) by other peroxide initiators such as peroxycarbonate initiators, for instance, t-butyl-perethylhexyl carbonate (e.g. Trigonox^{®} 117, AKZO; the Netherlands) or the like already leads to a major improvement in VOC-emissions by reducing the residual styrene content significantly and by avoiding the formation of traces of benzene in the SMC/BMC-material. Accordingly, nowadays peroxycarbonates like Trigonox 117 are considered to be the standard initiator in automotive SMC-parts.

A further reduction with respect to VOC is, however, urgently needed in order to comply with future environmental legislation for cars. Very demanding regulations in this respect are now in preparation, for instance, under the auspices of the Californian Air Resources Board (CARB). A proposal on "California Evaporative Emission Standards and Test Procedures for 2001 and Subsequent Motor Vehicles", for instance, can be found at http://www.arb.ca.gov/regact/levii/15-day/evptp01.pdf. Reference also can be made to an article ("Entwicklung HC emissionsoptimierter KFZ-Bauteile") of Frank, U. et al. in Kunststoffe im Automobilbau, Düsseldorf, VDI-Verlag, 2002. Car manufacturers will be forced to reduce any non-fuel emissions to lower levels and, therefore, they also will demand emission reductions from their suppliers for all automotive parts that are likely to contribute to VOC emissions. The present SMC/BMC-technology, however, does not allow a further reduction of VOC-emissions. Accordingly, there is a strong industry need for providing SMC- and BMC-compositions that - upon moulding - have significantly reduced VOC emissions.

The present inventors carried out some detailed investigations of the VOC-emissions of parts cured with Trigonox 117 and found that roughly 60 to 85 wt.% of the VOC is composed of acetone, t-butanol and ethylhexanol. These three products are obviously formed to a large extent by side reactions of the primary radicals of Trigonox 117. However, they can also be generated from other sources.

The inventors thereby now surprisingly found that a significant reduction of the VOC- emissions of thermally curable resin compositions, in particular of Class A-SMC compounds, and especially a significant reduction of the alcoholic emissions therein, can be achieved by using certain isocyanates.

### Brief summary of the invention

The above-described drawbacks of the prior art are, according to the present invention, surprisingly overcome by providing a thermally curable resin composition, having shrink-controlled properties and being suitable for use in sheet moulding compounds and bulk moulding compounds (SMCs and BMCs) comprising, *inter alia*:
a. an unsaturated polyester;
b. an alkenyl aromatic monomer;
c. a low profile additive;
d. a peroxide initiator;
e. a thickening agent;
f. fibrous reinforcement material; and optionally one or more other components selected from the group of
g. a mould release agent;
h. wetting and viscosity reducing agents; and
i. fillers,
wherein said thermally curable resin composition also comprises an uret dione diisocyanate, in an amount of at least 0,2% by weight relative to the total weight of components (a), (b) and (c) of the resin composition.

The present inventors namely found that the presence of an uret dione diisocyanate in the resin compositions according to the invention, whether these are present as a separate component or in the form of low profile additives functionalized with such an uret dione diisocyanate, is extremely effective in reducing VOC emissions, while still ensuring and providing SMC- or BMC-materials which, upon curing, exhibit an excellent surface which is fully comparable to commercial state of the art Class A-SMC-parts. The effect of reduction of the VOC emissions becomes most pronounced if the parts made from the SMCs or BMCs according to the present invention by curing (which is normally done at temperatures in the range of up to 160 °C) are subjected to a further heat treatment for at least 10 minutes in the range of from 170 to 210 °C (hereinafter this treatment will be referred to as tempering).

According to the present invention, the uret-dionediisocyanates need to be present in an amount of at least 0,2% by weight relative to the total weight of components (a), (b) and (c) of the resin composition. The weight percentage of the uret dione diisocyanate actually to be chosen, of course, may vary according to the type of resin used, the application for which it is being used and the choice of form in which the uret dione diisocyanate is added to the resin composition (namely as such, or in the form of low profile additives functionalized with such an uret dione diisocyanate). The effect of the presence of the uret dione diisocyanate becomes larger as the amount of uret dione diisocyanate component in the resin composition increases. Generally, the amount of uret dione diisocyanate will be of from at least 0,2%, preferably at least 1%, to about 5 or 10% by weight relative to the total weight of components (a), (b) and (c) of the resin composition.

The unsaturated polyester resin used in the context of the present invention may be any such resin as is known to the skilled man. Examples thereof can be found in an excellent review article of M. Malik et al. in J.M.S. - Rev. Macromol. Chem. Phys., C40 (2&3), p.139-165 (2000). The authors describe a classification of such resins - on the basis of their structure - in five groups: (1) ortho resins; (2) iso-resins; (3) bisphenol-A-fumarates; (4) chlorendics, and (5) vinyl ester resins. Besides these classes of resins also so-called pure maleic resins and so-called dicyclopentadiene (DCPD) resins can be distinguished. Pure maleic resins (such as Palapreg P 18-21, Palapreg 0423, and Palapreg P18-03 of DSM Composite Resins, Schaffhausen, Switzerland) can very suitably be used in the context of the present invention.

The resin compositions according to the invention also comprise an alkenyl aromatic monomer. These monomers are reactive monomers and generally have the function of a cross-linking agent and/or a diluent. Examples of suitable monomers are, for instance, styrene, divinylbenzene, etc. but all other reactive monomers for use in the field of thermosetting resins as are known to the skilled man can be used.

The resin compositions according to the invention further comprise a low profile additive. These additives are needed for providing the LP- and shrink-controlling properties to the resin composition. Low profile additives (LPAs) are well known to the skilled man in the field of thermosetting resins. Examples of suitable LPAs are polyvinyl acetates, polymethyl methacrylates and copolymers with other acrylates, vinyl chloride - vinyl acetate copolymers, polyurethanes, styrene-butadiene copolymers and other elastomers, polystyrene and some copolymers, polycaprolactones, cellulose acetate butyrate, and a variety of saturated polyesters and blends of saturated polyesters with polyvinylchloride, etc. However, in the resin compositions according to the invention, as will be addressed in later paragraphs, preferably LPAs are used that have been modified by chemically attaching thereto an uret dione diisocyanate. Such LPAs, prepared from standard LPAs with groups that are reactive with the uret dione diisocyanate (for instance, Palapreg H 892 and Palapreg H 2681 of DSM Composite Resins, Schaffhausen, Switzerland), are herein also referred to as LPAs functionalized with an uret dione diisocyanate.

Additionally, the resin compositions according to the invention comprise a peroxide initiator. Peroxide initiators suitable for use in thermosetting resin compositions are well known to the skilled man in this field. Such peroxides include organic and inorganic peroxides, whether solid or liquid; also hydrogen peroxide may be applied. Examples of suitable peroxides are, for instance, peroxy carbonates (of the formula -OC(O)O-), peroxyesters (of the formula -C(O)OO-), diacylperoxides (of the formula -C(O)OOC(O)-), dialkylperoxides (of the formula -OO-), etc. They can also be oligomeric or polymeric in nature. An extensive series of examples of suitable peroxides can be found, for instance, in US 2002/0091214-A1, paragraph [0018]. The skilled man can easily obtain information about the peroxides and the precautions to be taken in handling the peroxides in the instructions as given by the peroxide producers. Indeed, all such peroxide initiators can be applied, but the present invention is most effective when the peroxide initiator is a peroxy carbonate initiator.

Preferably, the thermally curable resin compositions according to the invention comprise a peroxide initiator (d) that is selected from the group of peroxy carbonate esters. For this type of thermally curable resin compositions effect in reduction of VOC according to the invention tend to be largest.

Most preferably, the peroxide initiator (d) is t-butyl-per-ethylhexyl carbonate.

The uret dione diisocyanate employed in the resin compositions according to the present invention preferably is an aromatic or aliphatic or cycloaliphatic or aromatic-aliphatic uret dione diisocyanate of formula (I) 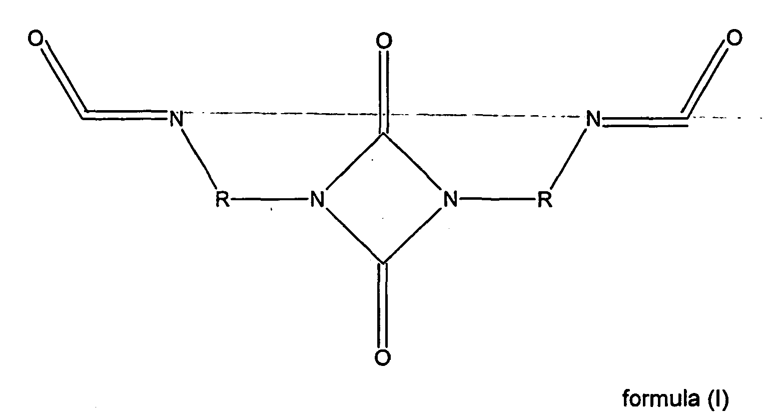 wherein each R is, independently from the other R, a difunctional alkyl structure of 1 to 20 carbon atoms; or an aromatic ring structure or a cycloaliphatic structure or an aromatic aliphatic structure of 5 to 20 carbon atoms, and additionally possibly also containing one or more oxygen or nitrogen atoms. Generally, aliphatic and cycloaliphatic uret dione diisocyanates are liquid at room temperature; the aromatic and aromatic-aliphatic ones tend to be solid at room temperature.

Structural units of the formula (I) are generally referred to as uret diones. They contain as a central structural unit a 1,3-diazetidine-2,4-dione, and - upon heat treatment for a sufficiently long time, for instance, at a temperature above 130 °C - the molecules of formula (I) are split into two diisocyanate molecules. Some of such compounds of formula (I) are commercially available. Mostly, such commercially available uret diones are based on either of 2,4-toluenediisocyanate, isophoronediisocyanate and/or other (so-called technical) diisocyanates. In case one or both of the R-groups in the compounds of formula (I) also contain one or more oxygen or nitrogen atoms, they may be called hetero-aromatic or -cycloaliphatic or an -aromatic aliphatic.

In principle, there are two ways to introduce the uret dione diisocyanate into the SMC/BMC material. According to a first preferred embodiment of the present invention, this is done by simple addition to the ingredients of the resin composition and subsequent mixing. It is an advantage of the liquid uret dione diisocyanates, that they dissolve easier and can be dosed more conveniently when preparing the resin compositions according to this first preferred embodiment of the invention. In a second preferred embodiment of the present invention, this is done by attaching the uret dione diisocyanate compound of formula (I) with one or both of its reactive side-chain isocyanate groups to the OH-, NH₂-, or COOH- groups of a low profile additive (for instance, a saturated polyester), and then adding said modified low profile additive to the ingredients of the resin composition and subsequent mixing. Also in this preferred embodiment of the invention the use of liquid uret dione diisocyanates is advantageous.

Preferably, at least part of the uret dione diisocyanate is chemically attached through one or both of its reactive side-chain isocyanate groups to one or more of the OH-, NH₂-, or COOH- groups of a low profile additive. Preferably, the low profile additive to which the uret dione compound is attached is selected from the groups of saturated polyesters (for instance Palapreg H 892 and Palapreg H 2681 of DSM Composite Resins, Schaffhausen, Switzerland), polyvinylacetates (for instance, Vinapas C501 from Wacker, Germany, or LP40Ac from DOW, USA), polymethylmethacrylates (for instance, Degalan 6639F, from Degussa, Germany), and polycaprolactones. Examples of such preferred low profile additives are the commercially available products as mentioned above.

Most preferably, all of the uret dione diisocyanate is chemically attached through one or both of its reactive side-chain isocyanate groups to one or more of the OH-, NH₂-, or COOH- groups of a low profile additive.

In addition, the thermally curable resin composition according to the invention may also contain further amounts of one or more low profile additives, which are not functionalized with an uret dione diisocyanate.

An important example of the group of uret dione diisocyanates, as can be used in the context of the present invention, is 1,3-bis(4-methyl-3-isocyanatophenyl)-1,3-diazetidine-2,4-dione. This (solid) product is, for instance, commercially available under the trade name Desmodur TT-G from Bayer AG, Germany or Desmodur TT from Rheinchemie, Germany. This molecule exhibits two isocyanate groups and one uret dione group.

The skilled man will be aware, that for each specific peroxide initiator used the content of the initiator can be optimized for any specific recipe (in order to achieve an optimum in curing results and VOC-emissions). As can be seen in the Comparative Example shown in the experimental part hereof, at optimum Trigonox^{™} 117 (a peroxy carbonate initiator of AKZO, the Netherlands) content (which optimum is found at 0.9 parts/100) the residual styrene content of the SMC-material is minimized and the side products acetone, t-butanol and ethylhexanol show low concentrations.

It is particularly preferred, that the fibrous reinforcement material in the resin compositions according to the present invention consists of glass fibers.

Finally, the present invention also relates to low-VOC products and parts obtained by curing of a thermally curable resin composition according to the invention, wherein the resin composition is first cured in a known manner and in suitable equipment, e.g. in a mould, at a temperature of at most 160°C, and subsequently is tempered in separate equipment, for instance in an oven, at a temperature in the range of from 170°C to 220°C for a period of at least 10 minutes, preferably of from 20 to 40 minutes. It is believed that this tempering treatment unblocks the isocyanate function from the uret dione, and that VOC-emission of alcoholic components is scavenged thereby.

This tempering treatment in practice in the automobile industries can be performed while painting the cured parts in the equipment used for the painting.

The invention is now being demonstrated by means of a series of Examples, but is not restricted in any way simply to the embodiments shown in the examples.

### Examples and Experiments

### Preparation of a modified LPA:

200 g of the low profile polyester Palapreg H 892-02 (DSM Composite Resins, Schaffhausen, Switzerland; a saturated polyester plus styrene) is mixed with 1.6 g of DesmodurTT-G (Rheinchemie, Germany; 1,3-bis-(4-methyl-3-isocyanatophenyl)-1,3-diazetidine-2,4-dione), 0.18 g of dibutyl tin dilaureate (OBTDL) and 0.126 g of a 10% solution of p-benzoquinone in styrene/acetone (50/50 v/v) and heated for 30 minutes at 75 °C. The obtained product is called modified LPA-A

### Preparation of a shrink-controlled thermally curable resin composition, containing modified LPA:

50 Parts of modified LPA-A were mixed with 50 parts of P18-03 (an unsaturated polyester maleic resin obtainable from DSM Composite Resins, Schaffhausen, Switzerland), together with other components as indicated in Table 1, to obtain a SMC paste formulation according to the invention having a content of 0.4 parts/100 (= 0.4% by weight) of uret dione diisocyanate with respect to the total weight of P18-03 plus H892-02.

### Curing and tempering:

After pressing (10 MPa, 180 s, 160 °C) some SMC- plates (120 * 250 mm) were tempered at 190 °C for 30 minutes in order to simulate the thermal cross-linking conditions of automotive coatings. For comparison some other SMC-plates were not tempered.

**Table 1:**

| **Compound** | **Parts** |
|---|---|
| Palapreg P 18-03 | 50 |
| (unsaturated polyester) | |
| Modified LPA-A | 50 |
| Inhibitor (PBQ 10%) | 0.2 |
| Viscosity reducer | 3 |
| (VR 3; DOW, US) | |
| Trigonox 117 (Tx 117; AKZO, the Netherlands) | 0.8 up to 1.2 |
| Mould release agent | 4 |
| (Ceasit 1; Baerlocher, Germany) | |
| Filler | 210 |
| (Millicarb; Omya, U.K.) | |
| Thickening agent | 2.5 |
| (Luvatol MK 35; Lehmann & Voss, Germany) | |
| Glass fiber | 25 weight-% with respect to total mass of SMC |
| (P 204; Vetrotex, France) | |

### Emission measurements:

The emission was measured in accordance to AUDI PV 3341 head space method
Split 1: 20
Column: Type Carbowax, length 30 meters
Carrier gas Helium
Temperature of injection 200°C
Temperature of detector 250°C
Degassing conditions of the 300 mg SMC samples in the vials before head space analysis was done: 120 min at 120°C

Temperature program of column oven:
- 10 min isotherm at 31°C
- Heat up to 150 °C with a rate of 9 °C/min
- Heat up to 200 °C with a rate of 25 °C/min
- 2 min isotherm at 200 °C

### Comparative Example A

### Optimization of Trigonox 117 concentration in an SMC

Conditions of head space measurement:
Sample size: 0.5 x 0.5 cm
Sample mass: 300 mg
Number of samples measured: 3
SMC-plates were not tempered; "not tempered" means that the parts did not undergo a 30 minutes heat treatment at 190 °C (as is sort of standard time required for applying of automotive coatings in automotive industries.

**Table 2:**

| concentration of | acetone | t-butanol | styrene | ethylhexanol |
|---|---|---|---|---|
| Tx 117 [parts/100] | [peak area] | [peak area] | [peak area] | [peak area] |
| 0.80 | 23,023 | 24,001 | 45,762 | 13,740 |
| 0.85 | 23,117 | 28,548 | 25,390 | 15,573 |
| 0.90 | 25,760 | 28,853 | 15,779 | 16,247 |
| 0.95 | 27,132 | 31,166 | 17,928 | 15,983 |
| 1.00 | 27,245 | 34,277 | 16,186 | 17,906 |
| 1.05 | 28,871 | 33,912 | 15,526 | 18,069 |
| 1.10 | 32,699 | 36,832 | 18,032 | 18,900 |
| 1.15 | 34,306 | 37,227 | 15,370 | 18,473 |
| 1.20 | 35,564 | 39,096 | 14,136 | 20,235 |

With increasing content of Tx 117 the concentration of acetone, t-butanol and ethylhexanol is increasing. The concentration of styrene is first decreasing. With above 0.90 parts/100 of Tx 117 the concentration of styrene stays constant. Therefore optimum Trigonox 117 content is 0.9 parts.

### Example 1) SMC with LP-polyesters modified by Desmodur TT-G, based on 0.9 parts Trigonox 117 and tempered Plates (190 °C, 30 min)

Conditions of head space measurement:
Sample size : 0.5 x 0.5 cm
Sample mass : 300 mg
Number of samples measured: 3
SMC-plates tempered for 30 min at 190°C.

Various SMC compositions, differing in content of uret dione component, were made according to the composition as shown in Table 1 for 0.4%, except that the amount of uret dione component in the preparation of the LPA-A component was adapted so as to reach the desired value for the uret dione content in the SMC composition.

**Table 3:**

| Concentration of Desmodur TT [%] | acetone [peak area] | t-butanol [peak area] | styrene [peak area] | ethylhexanol [peak area] |
|---|---|---|---|---|
| Reference standard compsn; tempered | 10,452 | 19,954 | - | 14,736 |
| 0.2 | 13,098 | 19,711 | - | 11,444 |
| 0.3 | 11,139 | 18,172 | - | 10,637 |
| 0.4 | 11,092 | 16,135 | - | - |
| 0.5 | 13,953 | 18,377 | - | - |

Table 3 shows that tempering reduces styrene concentration to levels below detection limit. The same is true for ethylhexanol, if 0.4 or 0.5 parts of Desmodur TT-G are incorporated into the LP-Polyester. Because of high vapor pressure the concentrations of t-butanol and acetone are strongly reduced when compared to the non tempered material.

### Example 2) SMC with Desmodur TT-G added as a separate component to the recipe, 0.9 parts of Trigonox 117 and Tempered Plates (190 °C, 30 min)

Conditions of head space measurement as in Example 1.

**Table 4:**

| Concentration of Desmodur TT [%] | acetone [peak area] | t-butanol [peak area] | styrene [peak area] | ethylhexanol [peak area] |
|---|---|---|---|---|
| Reference standard compsn; tempered | 10,452 | 19,954 | - | 14,736 |
| 0.4 | 12.292 | 20.696 | 4.217 | 13.359 |

It follows from the above results that adding Desmodur TT-G (as a separate component) to the SMC recipe leads to less reduction of ethylhexanol. Incorporation of Desmodur TT into the LP-Polyester is thus even more effective.

## Claims

1. Thermally curable resin composition, having shrink-controlled properties and being suitable for use in sheet moulding compounds and bulk moulding compounds (SMCs and BMCs) comprising, *inter alia*:
a. an unsaturated polyester;
b. an alkenyl aromatic monomer;
c. a low profile additive;
d. a peroxide initiator;
e. a thickening agent;
f. fibrous reinforcement material; and optionally one or more components selected from the group of
g. mould release agents;
h. wetting and viscosity reducing agents; and
i. fillers,
**characterized in that** the thermally curable resin composition also comprises a uret dione diisocyanate, in an amount of at least 0,2% by weight relative to the total weight of components (a), (b) and (c) of the resin composition.

2. Thermally curable resin composition according to claim 1, **characterized in that** the peroxide initiator is selected from the group of peroxy carbonate esters.

3. Thermally curable resin composition according to claim 1 or 2, **characterized in that** the peroxide initiator is t-butyl-per-ethylhexyl carbonate.

4. Thermally curable resin composition according to any of claims 1 to 3, **characterized in that** the uret dione diisocyanate is an aromatic or aliphatic or cycloaliphatic or aromatic-aliphatic uret dione diisocyanate of formula (I) 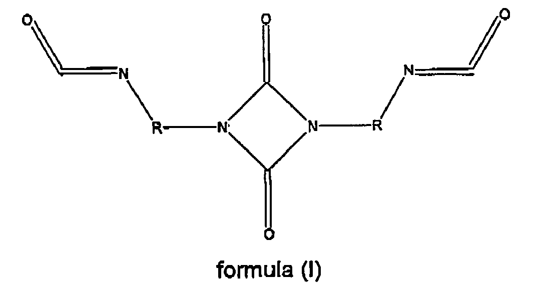 wherein each R is, independently of the other R, a difunctional alkyl structure of 1 to 20 carbon atoms; or an aromatic ring structure or a cycloaliphatic structure or an aromatic aliphatic structure of 5 to 20 carbon atoms, and additionally possibly also containing one or more oxygen or nitrogen atoms.

5. Thermally curable resin composition according to any of claims 1 to 4, **characterized in that** at least part of the uret dione diisocyanate is chemically attached through one or both of its reactive side-chain isocyanate groups to one or more of the OH-, NH₂-, or COOH- groups of a low profile additive.

6. Thermally curable resin composition according to any of claims 1 to 5, **characterized in that** all of the uret dione diisocyanate is chemically attached through one or both of its reactive side-chain isocyanate groups to one or more of the OH-, NH₂-, or COOH- groups of a low profile additive.

7. Thermally curable resin composition according to any of claims 1 to 6, **characterized in that** the fibrous reinforcement material consists of glass fibers.

8. Low-VOC products and parts obtained by curing of a thermally curable resin composition according to any of claims 1 to 7, **characterized in that** the resin composition is first cured in a known manner and in suitable equipment at a temperature of at most 160 °C, and subsequently is tempered in separate equipment at a temperature in the range of from 170 °C to 220 °C for a period of at least 10 minutes, preferably of from 20 to 40 minutes.

## Patentansprüche

1. Thermisch härtbare Harzzusammensetzung, die schwindungsreduzierte Eigenschaften aufweist und zur Verwendung in Sheet Moulding Compounds und Bulk Moulding Compounds (SMCs und BMCs) geeignet ist, u.a. enthaltend:
a. einen ungesättigten Polyester;
b. ein alkenylaromatisches Monomer;
c. ein Low-Profile-Additiv;
d. einen Peroxid-Initiator;
e. ein Verdickungsmittel;
f. faserförmiges Verstärkungsmaterial; und gegebenenfalls eine oder mehrere Komponenten aus der Gruppe bestehend aus
g. Formtrennmitteln;
h. Netzmitteln und Viskositätserniedrigern und
i. Füllstoffen,
**dadurch gekennzeichnet, daß** die thermisch härtbare Harzzusammensetzung außerdem ein Uretdiondiisocyanat in einer Menge von mindestens 0,2 Gew.-%, bezogen auf das Gesamtgewicht der Komponenten (a), (b) und (c) der Harzzusammensetzung, enthält.

2. Thermisch härtbare Harzzusammensetzung nach Anspruch 1, **dadurch gekennzeichnet, daß** der Peroxid-Initiator aus der Gruppe der Peroxycarbonatester ausgewählt ist.

3. Thermisch härtbare Harzzusammensetzung nach Anspruch 1 oder 2, **dadurch gekennzeichnet, daß** es sich bei dem Peroxid-Initiator um t-Butyl-perethylhexylcarbonat handelt.

4. Thermisch härtbare Harzzusammensetzung nach einem der Ansprüche 1 bis 3, **dadurch gekennzeichnet, daß** es sich bei dem Uretdiondiisocyanat um ein aromatisches oder aliphatisches oder cycloaliphatisches oder aromatisch-aliphatisches Uretdiondiisocyanat der Formel (I) 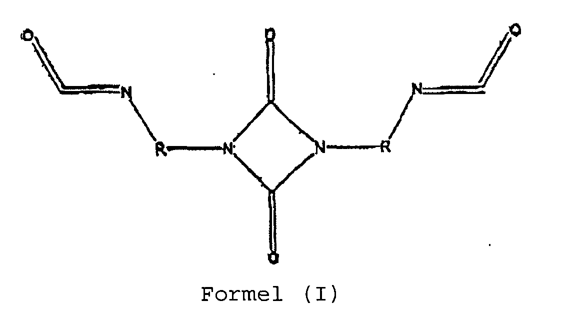 worin jedes R unabhängig von dem anderen R für eine difunktionelle Alkylstruktur mit 1 bis 20 Kohlenstoffatomen oder eine aromatische Ringstruktur oder eine cycloaliphatische Struktur oder eine aromatisch-aliphatische Struktur mit 5 bis 20 Kohlenstoffatomen, die zusätzlich gegebenenfalls ein oder mehrere Sauerstoff- oder Stickstoffatome enthält, steht, handelt.

5. Thermisch härtbare Harzzusammensetzung nach einem der Ansprüche 1 bis 4, **dadurch gekennzeichnet, daß** mindestens ein Teil des Uretdiondiisocyanats über eine oder beide seiner reaktiven Seitenketten-Isocyanatgruppen chemisch an eine oder mehrere der OH-, NH₂- oder COOH-Gruppen eines Low-Profile-Additivs gebunden ist.

6. Thermisch härtbare Harzzusammensetzung nach einem der Ansprüche 1 bis 5, **dadurch gekennzeichnet, daß** das gesamte Uretdiondiisocyanat über eine oder beide seiner reaktiven Seitenketten-Isocyanatgruppen chemisch an eine oder mehrere der OH-, NH₂- oder COOH-Gruppen eines Low-Profile-Additivs gebunden ist.

7. Thermisch härtbare Harzzusammensetzung nach einem der Ansprüche 1 bis 6, **dadurch gekennzeichnet, daß** das faserförmige Verstärkungsmaterial aus Glasfasern besteht.

8. VOC-arme Produkte und Teile, erhalten durch Härten einer thermisch härtbaren Harzzusammensetzung nach einem der Ansprüche 1 bis 7, **dadurch gekennzeichnet, daß** die Harzzusammensetzung zunächst auf an sich bekannte Art und Weise und in einer geeigneten Einrichtung bei einer Temperatur von höchstens 160°C gehärtet und danach in einer separaten Einrichtung über einen Zeitraum von mindestens 10 Minuten, vorzugsweise 20 bis 40 Minuten, bei einer Temperatur im Bereich von 170°C bis 220°C getempert wird.

## Revendications

1. Composition de résine thermodurcissable, ayant des propriétés de rétrécissement contrôlé et étant convenable pour une utilisation dans des compositions de moulage en feuille et des compositions de moulage en vrac (SMC et BMC) comprenant, entre autres :
a. un polyester insaturé ;
b. un monomère alcényle aromatique ;
c. un additif à profil bas (low profile additive) ;
d. un amorceur peroxyde ;
e. un agent épaississant ;
f. un matériau de renforcement fibreux ; et éventuellement un ou plusieurs composants choisis dans le groupe comprenant
g. des agents de démoulage ;
h. des agents mouillants et de réduction de viscosité ; et
i. des charges,
**caractérisée en ce que** la composition de résine thermodurcissable comprend également un uretdionediisocyanate, dans une quantité d'au moins 0,2 % en poids par rapport au poids total des composants (a), (b) et (c) de la composition de résine.

2. Composition de résine thermodurcissable selon la revendication 1, **caractérisée en ce que** l'amorceur peroxyde est choisi dans le groupe comprenant des esters de peroxycarbonate.

3. Composition de résine thermodurcissable selon la revendication 1 ou 2, **caractérisée en ce que** l'amorceur peroxyde est le carbonate de t-butyl-per-éthylhexyle.

4. Composition de résine thermodurcissable selon l'une quelconque des revendications 1 à 3, **caractérisée en ce que** l'uretdionediisocyanate est un uretdionediisocyanate aromatique ou aliphatique ou cycloaliphatique ou aromatique-aliphatique de formule (I) 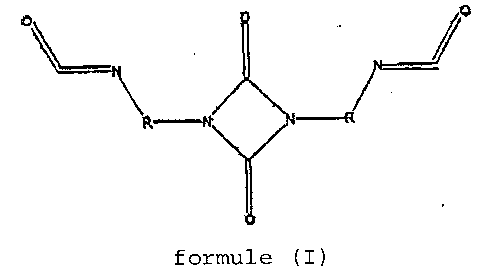 dans laquelle chaque R est, indépendamment de l'autre R, une structure alkyle difonctionnelle de 1 à 20 atomes de carbone, ou une structure de cycle aromatique ou une structure cycloaliphatique ou une structure aliphatique aromatique de 5 à 20 atomes de carbone, et en outre éventuellement contenant également un ou plusieurs atomes d'oxygène ou d'azote.

5. Composition de résine thermodurcissable selon l'une quelconque des revendications 1 à 4, **caractérisée en ce qu'**au moins une partie de l'uretdionediisocyanate est liée chimiquement par l'intermédiaire de l'un ou des deux groupements isocyanate réactifs des chaînes latérales à un ou plusieurs groupements OH-, NH₂- ou COOH- d'un additif à profil bas.

6. Composition de résine thermodurcissable selon l'une quelconque des revendications 1 à 5, **caractérisée en ce que** l'ensemble de l'uretdionediisocyanate est lié chimiquement par l'intermédiaire de l'un ou des deux groupements isocyanate réactifs des chaînes latérales à un ou plusieurs groupements OH-, NH₂- ou COOH- d'un additif à profil bas.

7. Composition de résine thermodurcissable selon l'une quelconque des revendications 1 à 6, **caractérisée en ce que** le matériau de renforcement fibreux est constitué de fibres de glace.

8. Produits et pièces à faible teneur en COV obtenus par durcissement d'une composition de résine thermodurcissable selon l'une quelconque des revendications 1 à 7, **caractérisés en ce que** la composition de résine est d'abord durcie de manière connue et dans un appareil convenable à une température inférieure ou égale à 160°C, et est ensuite tempérée dans un appareil distinct à une température dans la gamme de 170°C à 220°C pendant une période d'au moins 10 minutes, de préférence de 20 à 40 minutes.
